(19) Europäisches Patentamt
European Patent Office
Office européen des brevets

(11) Veröffentlichungsnummer: **0 299 485 B1**

(12) **EUROPÄISCHE PATENTSCHRIFT**

(45) Veröffentlichungstag der Patentschrift: **07.10.92**

(51) Int. Cl.$^5$: **B01J 23/44**, B01D 53/36

(21) Anmeldenummer: **88111336.9**

(22) Anmeldetag: **14.07.88**

# (54) Katalysator zur Oxidation von Kohlenstoffverbindungen.

(30) Priorität: **14.07.87 CH 2685/87**

(43) Veröffentlichungstag der Anmeldung:
**18.01.89 Patentblatt 89/03**

(45) Bekanntmachung des Hinweises auf die Patenterteilung:
**07.10.92 Patentblatt 92/41**

(84) Benannte Vertragsstaaten:
**AT BE CH DE ES FR GB IT LI NL SE**

(56) Entgegenhaltungen:
**EP-A- 0 139 240**
**US-A- 3 914 377**
**US-A- 4 233 185**

**CHEMISTRY LETTERS, 1983, Seiten 195-198, The Chemical Society of Japan, Tokyo, JP; A. YOKOYAMA et al.: "An active methanation catalyst prepared from an amorphous Pd35Zr65 alloy"**

(73) Patentinhaber: **LONZA AG**

**Gampel/Wallis(CH)**

(72) Erfinder: **Baiker, Alfons, Dr.**
**Rietgrabenstrasse 63**
**Opfikon (Kanton Zürich)(CH)**
Erfinder: **Gasser, Daniel**
**Büsingerstrasse 12**
**Schaffhausen(DE)**

(74) Vertreter: **Weinhold, Peter, Dr. et al**
**Patentanwälte Dr. V. Schmied-Kowarzik**
**Dipl.-Ing. G. Dannenberg Dr. P. Weinhold Dr. D. Gudel Dipl.-Ing. S. Schubert Dr. P. Barz**
**Siegfriedstrasse 8**
**W-8000 München 40(DE)**

EP 0 299 485 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen aktivierten PdZr-oxid-Katalysator als amorphe oder kristalline Legierung, einen $PdZrO_2$-Fällungskatalysator sowie Verfahren zur totalen Oxidation von CO, aliphatischen und aromatischen Kohlenwasserstoffen sowie aliphatischen Alkoholen mit Hilfe dieser Katalysatoren. Insbesondere betrifft die Erfindung die totale Oxidation der genannten Verbindungen in sauerstoffhaltigen Gasströmen, z.B. Abgasströmen von fossilen Verbrennungsanlagen.

Es ist bekannt, trägergebundene Edelmetallkatalysatoren zur Oxidation von Kohlenmonoxid und Kohlenwasserstoffen zu verwenden. (Yung-Fang Yu Yao, J.Catal., 87, 152-162 [1984].) Nachteilig ist, dass, abgesehen von den sehr teuren Edelmetallkatalysatoren, die ein wirtschaftliches Verfahren in grösserem Massstab nicht denkbar machen, die Umsetzungstemperaturen in der Regel hoch angesetzt werden. Daher ist aus energetischer Sicht das Verfahren wiederum im Hinblick auf die Wirtschaftlichkeit und Kosten eher weniger günstig.

Es ist auch bekannt, Kohlenmonoxid in Gegenwart von amorphen Metallbändern der Zusammensetzung $Pd_{35}Zr_{65}$ als Methanisierungskatalysator für CO und $H_2$ einzusetzen. (Yokohama et al., Chemistry letters, The Chemical Society of Japan, 195-198 [1983].)

Aufgabe der Erfindung war es daher, Katalysatoren zu entwickeln, die die genannten Nachteile nicht aufweisen. Gelöst werden konnte die Aufgabe mittels eines neuen aktivierten $Pd_x(ZrO_z)_y$-Katalysators gemäss Patentanspruch 1 einerseits sowie mit einem neuen $PdZrO_2$-Fällungskatalysator nach Patentanspruch 6 anderseits.

Erfindungsgemäss wird nach Patentanspruch 1 ein aktivierter Katalysator der allgemeinen Formel $Pd_x(ZrO_z)_y$ eingesetzt, wobei x eine Zahl zwischen 1 bis 99, vorzugsweise zwischen 20 und 80, y die Differenz zwischen x und 100 und z einen Wert zwischen 0,5 und 2, vorzugsweise zwischen 1 und 2, bedeuten und das Palladium in Form von Palladiumpartikeln vorliegt, die in einer $ZrO_z$-Matrix eingebettet sind. Insbesondere hat der aktivierte Katalysator die Formel $Pd_{33}(ZrO_2)_{67}$.

Der aktivierte Katalysator liegt zweckmässig als amorphe oder als kristalline Legierung vor.

Die Herstellung von amorphen Legierungen ist an sich bekannt. Wesentliches Merkmal ist, dass die Elemente, die die Legierung bilden, unter einem Schutzgas wie Argon vorgeschmolzen werden, diese Vorlegierung erneut aufgeschmolzen wird und die Schmelze schliesslich mit Kühlraten von zweckmässig $10^3$ bis $10^9$ °C/s, vorzugsweise $10^6$ bis $10^9$ °C/s, abgekühlt wird. Mit diesem "Abschreckvorgang" wird erreicht, dass sich eine amorphe Phase der Legierung ausbildet. Bekannte Verfahren sind, beispielhaft aufgezählt, das Melt-Spin-Verfahren, das Splat-cool-Verfahren, ferner Verfahren zur Erzeugung von amorphen Pulvern durch Schmelzen und Versprühen der Legierung usw.

Nach vorliegender Erfindung können auch kristalline oder kristallisierte Legierungen der erfindungsgemässen Zusammensetzungen verwendet werden. Solche Legierungen können auf an sich übliche Weise hergestellt werden, d.h. durch Schmelzen der Ausgangsstoffe und anschliessendes Abkühlen lassen. Es ist auch möglich, amorphe Legierungen durch Erhitzen über die Kristallisationstemperatur hinaus, in der Regel im Hochvakuum, wieder in den kristallinen Zustand zu überführen.

Abhängig vom Herstellungsverfahren kann die Legierung als Band, Bandstückchen, als Formkörper aus Band oder Pulverform vorliegen.

Im nicht aktivierten Zustand kann die Oberfläche in einem Bereich von 0,01 bis 0,1 $m^2/g$ liegen.

Vor deren Einsatz als Katalysator müssen diese Legierungen erst erfindungsgemäss "in situ" oder in einem sauerstoffhaltigen Gasstrom aktiviert werden. Dabei erfolgt eine teilweise bis vollständige Oxidation des Zirkoniums zu Zirkonoxiden der Formel $ZrO_z$, worin z die genannte Bedeutung hat.

Das Palladium bleibt in der Regel bei der Aktivierung oxidativ unverändert, so dass der aktivierte Katalysator, wie röntgenographische Untersuchungen zeigen, aus Palladiumpartikeln, die in einer $ZrO_z$ Matrix eingebaut sind, besteht.

"In situ" bedeutet, dass die Legierung zweckmässig bei Temperaturen zwischen 150 bis 350 °C, vorzugsweise zwischen 200 und 300 °C, mit der, die Reaktanden enthaltenden Gasmischung über-oder durchströmt wird. Nach einem Zeitintervall von zweckmässig 2 bis 400 Stunden, in der Regel aber von 2 bis 100 Stunden, erreicht die Legierung ihre volle katalytische Aktivität. Kürzere Aktivierungszeiten, von 0,1 bis 2 Stunden, erreicht man durch Aktivierungs im Luftstrom. Zur blossen Aktivierung kann anstelle der umzusetzenden Gasmischung auch ein sauerstoffhaltiges Gas allein angewendet werden.

Die erfolgte Aktivierung lässt sich durch Messung der spezifischen Oberfläche, z.B. nach der BET-Methode, charakterisieren.

So besitzt ein erfindungsgemässer $Pd_x(ZrO_z)_y$-Katalysator, abhängig von der Aktivierung, eine spezifische Oberfläche von zweckmässig 15 bis 60 $m^2/g$.

Eine weitere Methode die Aktivierung zu charakterisieren ist, die Messung der Metalloberfläche, basierend auf der Bestimmung der Chemisorption.

Die erfindungsgemässen $Pd_x(ZrO_z)_y$-Katalysatoren haben, ebenfalls abhängig von der Aktivierung, eine spezifische Metalloberfläche, zweckmässig zwischen 2 und 20 $m^2/g$.

Die aktivierten Katalysatoren nach vorliegender Erfindung werden für die totale Oxidation von Kohlenmonoxid, von aliphatischen Kohlenwasserstoffen, vorzugsweise mit 4 bis 8 C-Atomen und aromatischen Kohlenwasserstoffen, vorzugsweise unsubstituierte oder mit $C_1$-$C_2$-Alkylgruppen substituierte Benzole sowie von aliphatischen Alkoholen, vorzugsweise $C_1$-$C_4$ Alkohole in der Gasphase eingesetzt. Besonders geeignet ist das Verfahren zur totalen Oxidation der genannten Verbindungen in Abgasströmen, von fossilen Verbrennungsanlagen. Dabei ist die überragende Eigenschaft des erfindungsgemässen Katalysators, nämlich Gemische der genannten Verbindungen total zu oxidieren, hervorzuheben.

Die aliphatischen Kohlenwasserstoffe können gesättigt oder ungesättigt, substituiert oder unsubstituiert sein. Zweckmässige Vertreter dieser Verbindungsklasse sind z.B. Butan, Pentan, Penten, Hexan oder Octan.

Vertreter von aromatischen Kohlenwasserstoffen können z.B. sein Benzol, Toluol, Ethylbenzol oder Xylol.

Als aliphatische Alkohole können zweckmässig die kürzerkettigen Verbindungen wie Methanol, Ethanol, Propanol oder Butanol, bevorzugt aber Methanol, genannt werden.

Der erfindungsgemässe Katalysator ist besonders geeignet zur totalen Oxidation von Kohlenmonoxid zu Kohlendioxid und zur Oxidation von Methylalkohol zu Kohlendioxid und Wasser.

Die Reaktionstemperatur, also die Temperatur, die zu einer totalen Oxidation notwendig ist, ist abhängig vom zu oxidierenden Reaktanden im Gasstrom, liegt aber zweckmässig zwischen Raumtemperatur und 350 ° C.

Für die Oxidation von Methanol liegt der bevorzugte Temperaturbereich zwischen 100 und 200 ° C.

Für die Oxidation von Kohlenmonoxid liegt der bevorzugte Temperaturbereich zwischen 100 und 200 ° C.

Die Druckverhältnisse während der Reaktion sind in der Regel nicht kritisch, und es wird zweckmässig bei Drücken zwischen Normaldruck und 10 bar, vorzugsweise bei Normaldruck gearbeitet. Abhängig vom Reaktanden sollte die Gasgeschwindigkeit zweckmäßig eingestellt werden. Üblicherweise ist ein Bereich von 0,05 bis 10 Nl/min x g Katalysator sinnvoll.

Die Konzentration des Reaktanden im Gasstrom bei der Oxidation von Methanol kann vorzugsweise 100 ppm bis 7 Vol.% oder mehr als 36 Vol.% an Methanol betragen.

Die Konzentration des Reaktanden im Gasstrom bei der Oxidation von Kohlenmonoxid liegt zweckmäßigerweise zwischen 100 ppm und 50 Vol.% an CO.

Die Aufgabe der Erfindung konnte ebenfalls gelöst werden durch die neuen $PdZrO_2$-Fällungskatalysatoren gemäss Patentanspruch 6.

Erfindungsgemäss weisen diese Katalysatoren eine Pd-Gehalt zwischen 0,2 und 20 Gew.% auf. Bevorzugt wird ein Katalysator mit einem Pd-Gehalt von 1 bis 5 Gew.% eingesetzt.

Hergestellt wird der $PdZrO_2$-Fällungskatalysator durch Imprägnieren eines pulverisierten Zirkonoxids mit einer Oberfläche von 10 bis 60 $m^2/g$ mit einem in Wasser gelösten Palladiumsalz, Trocknen der feuchten Mischung und Reduktion des entstandenen Pd-Komplexes mit Wasserstoff.

Als wasserlösliche Pd-Salze , insbesondere Pd(II)Salze können z.B. Palladiumchloride, wie Palladium-II-chlorid, oder komplexierte Palladiumchloride, wie Ammoniumtetrachloropalladat (II), eingesetzt werden.

Die Trocknung des Gemisches geschieht zweckmässig bei 120 bis 300 ° C.

Vorteilhaft wird die Reduktion in Gegenwart eines Wasserstoff-Stickstoffgemisches im Verhältnis $H_2$:$N_2$ von zwischen 1 zu 10 und 10 zu 1 bei Temperaturen von 200 bis 600 ° C durchgeführt. Besonders vorteilhaft wird die Temperaturführung so gewählt, dass die endgültige Reduktionstemperatur erst nach stufenweiser Erhöhung erreicht wird.

Fällungskatalysatoren dieser Art werden erfindungsgemäss ebenfalls für die totale Oxidation von Kohlenmonoxid, von aliphatischen Kohlenwasserstoffen, vorzugsweise mit 4 - 8 C-Atomen und aromatischen Kohlenwasserstoffen, vorzugsweise unsubstituierte oder mit $C_1$-$C_2$-Alkylgruppen substituierte Benzole sowie von aliphatischen Alkoholen, vorzugsweise $C_1$-$C_4$-Alkohole in der Gasphase eingesetzt. Besonders geeignet ist das Verfahren zur totalen Oxidation der genannten Verbindungen in Abgasströmen.

Die aliphatischen Kohlenwasserstoffe können gesättigt oder ungesättigt, substituiert oder unsubstituiert sein. Zweckmässige Vertreter dieser Verbindungsklasse sind z.B. Butan, Pentan, Penten, Hexan oder Octan.

Vertreter von aromatischen Kohlenwasserstoffen können z.B. sein Benzol, Toluol, Ethylbenzol oder Xylol.

Als aliphatische Alkohle können zweckmässig die kürzerkettigen Verbindungen wie Methanol, Ethanol, Propanol oder Butanol, bevorzugt aber Methanol, genannt werden.

Der erfindungsgemässe Katalysator ist besonders geeignet zur totalen Oxidation von Kohlenmonoxid zu Kohlendioxid und zur Oxidation von Methylalkohol zu Kohlendioxid und Wasser.

Die Reaktionstemperatur, also die Temperatur, die zu einer totalen Oxidation notwendig ist, ist abhängig vom zu oxidierenden Reaktanden im Gasstrom, liegt aber zweckmässig zwischen Raumtemperatur und 350 ° C.

Für die Oxidation von Methanol liegt der bevorzugte Temperaturbereich zwischen 100 und 200 ° C. Für die Oxidation von Kohlenmonoxid liegt der bevorzugte Temperaturbereich zwischen 100 und 200 ° C.

Die Druckverhältnisse während der Reaktion sind in der Regel nicht kritisch, und es wird zweckmässig bei Drücken zwischen Normaldruck und 10 bar, vorzugsweise bei Normaldruck gearbeitet.
Abhängig vom Reaktanden sollte die Gasgeschwindigkeit zweckmässig eingestellt werden. Üblicherweise ist ein Bereich von 0,05 bis 10 Nl/min x g Katalysator sinnvoll.
Die Konzentration des Reaktanden im Gasstrom bei der Oxidation von Kohlenmonoxid liegt zweckmässigerweise zwischen 100 ppm und 50 Vol.% an CO.

Die folgenden Beispiele sollen das erfindungsgemässe Verfahren erläutern.

## Beispiele

### Beispiel 1: Herstellung der Ausgangslegierungen

#### a) Herstellung der amorphen Ausganslegierung

Als Ausgangslegierung für die folgenden Versuche wurde eine $Pd_{33}Zr_{67}$-Legierung nach dem Schmelzspinnverfahren hergestellt. Es resultierten Bänder mit einer Dicke von 30 µm. Für deren Einsatz als Katalysator wurden die Bänder gemahlen. (Korngrössenbereich 0,1 bis 5 mm.)

#### b) Herstellung der kristallinen Ausgangslegierung

Die kristalline Ausgangslegierung wurde aus der unter a) hergestellten amorphen Ausgangslegierung durch Auskristallisieren im Hochvakuum bei einer Temperatur von 600 ° C hergestellt.

#### c) Herstellung und Aktivierung eines Pd-$ZrO_2$-Fällungskatalysators

Der Fällungskatalysator Pd/$ZrO_2$ (1 Gew.% Pd) entstand nach folgender Vorschrift.
Das als Granulat vorliegende Zirkondioxid (Harshaw ZR-0304 T1/8) wurde fein pulverisiert. Für die Imprägnation des Pulvers mit 1 Gew.% Pd wurden pro 10 g $ZrO_2$ 0,2674 g $(NH_4)_2PdCl_4$ in wenig Wasser gelöst. Die gewählte Wassermenge war gerade so gross, dass das Zirkonoxid vollständig durchtränkt wurde. Anschliessend wurde das feuchte Gemisch über Nacht bei 120 ° C getrocknet. In einer Wasserstoffatmosphäre wurde der Pd-Komplex reduziert. Die Reduktionsbedingungen wurden folgendermassen gewählt:

$H_2$:$N_2$ = 1:10
15 h bei 200 ° C
1 h bei 300 ° C
1 h bei 400 ° C

### Beispiel 2: Aktivierung der Ausgangslegierungen

#### a) "in situ" Aktivierung einer amorphen $Pd_{33}Zr_{67}$-Legierung

$Pd_{33}Zr_{67}$ Kontakte (0,30 g) in Form von Schnitzeln einer Korngrösse von 0,1 bis 1 mm und einer Oberfläche von 0,02 $m^2$/g wurden in einer Reaktionsdurchflussapparatur, in einem Mikroreaktor aus Pyrexglas, mit einem $N_2/O_2$/CO Gasgemisch 0,17 Vol.% CO, 0,17 Vol.% $O_2$ bei 202 ° C, 242 ° C und 282 ° C "in situ" aktiviert. Die Gasgeschwindigkeit betrug immer 150 Nml/min und die Konzentration von $O_2$ und CO betrug jeweils 1700 ppm. Die Versuche wurden bei Normaldruck durchgeführt. (Aktivierungszeiten siehe Abb. 1.)

#### b) Aktivierung einer amorphen $Pd_{33}Zr_{67}$-Legierung im Luftstrom

Die Kontakte (0,3 g) wurden in Reaktionsdurchflussapparatur in einem Luftstrom bei einer Gasgeschwindigkeit von 50 Nml/min bei Normaldruck und einer Temperatur von 280 ° C über 1 Stunde activiert.

c) "in situ" Aktivierung einer kristallinen $Pd_{33}Zr_{67}$-Legierung

$Pd_{33}Zr_{67}$ Kontakte (0,30 g) in Form von Schnitzeln von 0,1 bis 1 mm Grösse und einer Oberfläche von 0,02 $m^2/g$ wurden in einer Reaktionsdurchflussapparatur, in einem Mikroreaktor aus Pyrexglas, mit einem $N_2/O_2/CO$ Gasgemisch bei 280 °C "in situ" aktiviert. Die Gasgeschwindigkeit betrug immer 150 Nml/min und die Konzentration von $O_2$ und CO betrug jeweils 1700 ppm. Die Versuche wurden bei Normaldruck durchgeführt. (Aktivierungszeit siehe Abb. 1.)

d) Verhalten der aktivierten Ausgangslegierungen bei der CO-Oxidation

Zusammengefasst zeigt Abb. 1 mit einem Aktivitäts-Zeit-Diagramm wie sich die unterschiedliche Aktivierung auf die CO-Oxidation an einer amorphen und kristallinen Pd-Zr-Legierung niederschlägt.
Die "in situ" Konditionierung resultierte in jedem Fall in einer höheren Aktivität.
Verglich man das Verhalten der amorphen Legierung bei verschiedenen Temperaturen, so sah man, dass die Aktivierung mit zunehmender Temperatur schneller ablief. Die Aktivierung verlief parallel zur Oxidation des Zirkoniums. Röntgenographische Untersuchungen der resultierenden Katalysatoren zeigten, dass diese aus Palladium Partikel bestanden, die in eine Matrix von Zr-Oxiden eingebettet waren. Die Aktivierung der kristallinen Legierung verlief weniger schnell.

Für die Aktivierung bis zur stationären Aktivität können nachstehende Zeiten angegeben werden.

| In situ Aktivierung | Oxidationszeit |
|---|---|
| amorph 202 °C | ca. 360 h |
| amorph 242 °C | ca. 65 h |
| amorph 282 °C | ca. 10 h |
| kristallin 280 °C | ca. 150 h |

Tabelle 1 zeigt die - während der "in situ" Aktivierung der amorphen Probe - resultierende Vergrösserung der BET-Oberfläche.

Tabelle 1

| Spezifische Oberfläche nach BET Ausser der amorphen Probe wurden alle 6 Katalysatoren (nach Aktivierung) durch Adsorption von Stickstoff bestimmt | | | | | | |
|---|---|---|---|---|---|---|
| | amorph in situ 202 °C | amorph in situ 242 °C | amorph in situ 282 °C | amorph Pressluft 280 °C | / Trägerk. / | krist. in situ 280 °C |
| $A_{BET}$: ($m^2/g$): | 26,9 | 29,9 | 45,9 | 24,2 | 45,5 | 20,2 |
| $A_{BET}$ vom amorphen Ausgangsmaterial : 0,031 $m^2/g$ (Adsorption mit Krypton gemessen) | | | | | | |

Tabelle 2 zeigt die durch Chemisorptionsmessungen ermittelte freie Metalloberfläche.

Tabelle 2

| Metalloberfläche aus den Chemisorptionsmessungen | | | | | | |
|---|---|---|---|---|---|---|
| | amorph in situ 202 °C | amorph in situ 242 °C | amorph in situ 282 °C | amorph Pressluft 280 °C | / Trägerk. / | krist. in situ 280 °C |
| $A_{Pd}$: ($m^2/g$):<br>Dispersion: | 3,9<br>2,7 | 5,5<br>3,9 | 6,9<br>5,9 | 18,5<br>13,2 | 0,52<br>11,6 | 6,9<br>5,1 |
| $A_{Pd}$: weist auf die metallische Oberfläche des Palladiums. Die Dispersion in % zeigt prozentual den Anteil der Pd-Oberflächenatome, bezogen auf die Gesamtzahl der Metallatome. | | | | | | |

Zu den in Abb. 1 vorgestellten 4 Katalysatoren wurden für die Versuche in Tabelle 1 und 2 noch zwei weitere hinzugezogen:

a) Trägerkatalysator mit 1 Gew.% Pd auf $ZrO_2$.
b) Im Luftstrom bei 280 °C aktivierter Katalysator.

Beispiel 3: Totaloxidation von CO mit einem amorphen, kristallinen und Träger-Katalysator

Nach abgeschlossener Aktivierungsphase wurde die Reaktionstemperatur schrittweise gesenkt und der jeweilige Umsatz aufgezeichnet (vgl. Abb. 2). Die Gasgeschwindigkeit betrug immer noch 150 Nml/min und die Konzentration von $O_2$ und CO betrug jeweils 1700 ppm. Die Versuche wurden bei Normaldruck durchgeführt.
Aus Abb. 2 liess sich für die "in situ" aktivierten Katalysatoren eine steigende Tendenz bezüglich der Aktivität feststellen. So war ein amorpher Katalysator "in situ" aktiviert bei 282 °C, aktiver als ein kristalliner Katalysator aktiviert bei 280 °C, dieser wiederum aktiver als ein amorpher Katalysator "in situ" aktiviert bei 242 °C und dieser wiederum aktiver als ein amorpher Katalysator "in situ" aktiviert bei 202 °C.
Deutlich ersichtlich war, dass der Trägerkatalysator die geringste aufs Gramm bezogene Aktivität aufwies.

Durch die Bestimmung der freien Metalloberfläche war es möglich, die Aktivität pro katalytisch wirksamem Oberflächenatom anzugeben. Die Reaktionsgeschwindigkeit r wurde wie folgt definiert:

$(r) = (\text{Umsätze CO} \rightarrow CO_2/[\text{Atom}_{Pd}.s])$

In Abb. 3 wurden die im differentiellen Umsatzbereich erhaltenen Aktivitätsplots aufgetragen. Es war ersichtlich, dass sich ein von der Vorbehandlung abhängiges Aktivitätsverhalten einstellte. Die Diskrepanz zwischen Trägerkatalysator und der amorphen Legierung, die bei 282 °C angelassen wurde, ist am augenfälligsten. Bei $^1/T = 0{,}003$ (= 60 °C) ging eine 14-fach grössere Zentrenaktivität des "in situ" bei 282 °C aktivierten Katalysators gegenüber dem Trägerkatalysator hervor. Es schien also, dass die Art der Herstellung des $Pd/ZrO_2$ die Natur der aktiven Zentren beeinflusste.

Beispiel 4: Totaloxidation von Methanol

Ein 5 Vol.% Methanol-Luft Gemisch wurde bei Raumtemperatur über eine Schüttung von 0,2 g eines amorphen $Pd_{33}(ZrO_2)_{67}$-Katalysators in Form von Schnitzeln einer Korngrösse von 0,1 bis 1 mm geschickt (Reaktionsdurchflussapparatur). Die Gasgeschwindigkeit betrug dabei 300 Nml/min. Es wurde Normaldruck aufrechterhalten.
Im Gasstrom am Auslass der Apparatur konnte lediglich $CO_2$, $H_2O$ nachgewiesen werden, d.h. das Methanol wurde quantitativ totaloxidiert.

## Patentansprüche

**1.** Aktivierter Katalysator der allgemeinen Formel $Pd_x(ZrO_z)_y$, wobei x eine Zahl zwischen 1 und 99, y die Differenz zwischen x und 100 und z einen Wert zwischen 0,5 und 2 bedeutet und das Palladium in Form von Palladiumpartikeln vorliegt, die in einer $ZrO_z$-Matrix eingebettet sind.

**2.** Aktivierter Katalysator nach Patentanspruch 1 der allgemeinen Formel $Pd_x(ZrO_z)_y$, wobei x eine Zahl zwischen 20 und 80, y die Differenz zwischen x und 100 und z einen Wert zwischen 1 und 2, insbesondere $x = 33$, $y = 67$ und $z = 2$ bedeutet.

**3.** Aktivierter Katalysator nach Patentanspruch 1 oder 2 als amorphe Legierung.

**4.** Aktivierter Katalysator nach Patentanspruch 1 oder 2 als kristalline oder kristallisierte Legierung.

**5.** Aktivierter Katalysator nach Patentanspruch 1,2,3 oder 4, dadurch gekennzeichnet, dass die Aktivierung, ausgehend von einer $Pd_xZr_y$-Legierung, worin x und y die angegebene Bedeutung haben, in einem, die Reaktanden enthaltenden Gasstrom ("in situ") oder in einem sauerstoffhaltigen Gasstrom bei Temperaturen Zwischen 150 und 350 °C erfolgt ist.

**6.** $PdZrO_2$-Fällungskatalysator mit einem Pd-Gehalt zwischen 0,2 und 20 Gew.% hergestellt durch
a) Imprägnation von $ZrO_2$ mit einem wasserlöslichen Palladiumsalz bzw. komplexierten Palladiumsalz
b) Trocknen des Gemisches und

c) Reduktion des Pd-Komplexes mit Wasserstoff.

**7.** Fällungskatalysator nach Patentanspruch 6, dadurch gekennzeichnet, dass der Pd-Gehalt vorzugsweise zwischen 1 und 5 Gew.% liegt.

**8.** Fällungskatalysator nach Patentansprüchen 6 und 7, dadurch gekennzeichnet, dass als wasserlösliche Pd-Salze Palladium-bzw. komplexierte Palladiumchloride angewendet werden.

**9.** Fällungskatalysator nach Patentansprüchen 6, 7 und 8, dadurch gekennzeichnet, dass die Trocknung des Gemisches bei 120 bis 300°C erfolgt.

**10.** Fällungskatalysator nach Patentansprächen 6, 7, 8 und 9, dadurch gekennzeichnet, dass die Reduktion mit einem Wasserstoff-Stickstoffgasgemisch in einem Verhältnis $H_2$:$N_2$ zwischen 1 zu 10 und 10 zu 1 bei einer Temperatur zwischen 200 und 600°C erfolgt.

**11.** Verfahren zur totalen Oxidation von Kohlenmonoxid, aliphatischen und aromatischen Kohlenwasserstoffen sowie von aliphatischen Alkoholen, dadurch gekennzeichnet, dass die Verbindungen im sauerstoffhaltigen Gasstrom in Gegenwart eines aktivierten Katalysators der allgemeinen Formel $Pd_x(ZrO_z)_y$, wobei x, y und z die angegebene Bedeutung haben, in Form einer kristallinen oder amorphen Legierung nach einem oder mehreren der Ansprüche 1 bis 5 oder in Gegenwart eines $PdZrO_2$-Fällungskatalysators nach einem oder mehreren der Ansprüche 6 bis 10 bei Temperaturen zwischen Raumtemperatur und 350°C und Drücken von Normaldruck bis 10 bar umgesetzt werden.

**12.** Verfahren nach Patentanspruch 11 zur totalen Oxidation von Kohlenmonoxid, dadurch gekennzeichnet, dass ein Luftstrom, enthaltend 100 ppm bis 50 Vol.% Kohlenmonoxid, über einen aktivierten $Pd_x(ZrO_z)_y$-Katalysator, worin x, y und z die genannte Bedeutung haben, in Form einer kristallinen oder amorphen Legierung nach einem oder mehreren der Ansprüche 1 bis 5 oder in Gegenwart eines $pdZrO_2$-Fällungskatalysators nach einem oder mehreren der Ansprüche 6 bis 10, bei Temperaturen zwischen Raumtemperatur und 350°C, vorzugsweise zwischen 100 und 200°C und Drücken von Normaldruck bis 10 bar, vorzugsweise Normaldruck geleitet wird.

**13.** Verfahren nach Patentanspruch 11 zur totalen Oxidation von Methylalkohol, dadurch gekennzeichnet, dass ein Luftstrom, enthaltend 100 ppm bis 7 Vol.% oder mehr als 36 Vol.% Methylalkohol, über einen aktivierten $Pd_x(ZrO_z)_y$-Katalysator, worin x, y und z die genannte Bedeutung haben, in Form einer kristallinen oder amorphen Legierung, nach einem oder mehreren der Ansprüche 1 bis 5 oder in Gegenwart eines $PdZrO_2$-Fällungskatalysators nach einem oder mehreren der Ansprüche 6-10, bei Temperaturen zwischen Raumtemperatur und 350°C, vorzugsweise zwischen 50 und 200°C und Drücken von Normaldruck bis 10 bar, vorzugsweise Normaldruck geleitet wird.

## Claims

**1.** Activated catalyst of the general formula $Pd_x(ZrO_z)_y$, wherein x is an integer between 1 and 99, y is the difference between x and 100, and z has a value between 0.5 and 2, and the palladium is present in the form of palladium particles which are embedded in a $ZrO_z$-matrix.

**2.** Activated catalyst according to patent claim 1 of the general formula $Pd_x(ZrO_z)_y$, wherein x is an integer between 20 and 80, y is the difference between x and 100, and z has a value between 1 and 2, in particular being: $x = 33$, $y = 67$ and $z = 2$.

**3.** Activated catalyst according to patent claim 1 or 2 as an amorphous alloy.

**4.** Activated catalyst according to patent claim 1 or 2 as a crystalline or crystallized alloy.

**5.** Activated catalyst according to patent claims 1, 2, 3 or 4, characterized in that, starting with a $Pd_xZr_y$-alloy, in which x and y have the mentioned meanings, the activation was effected ("in situ") in a gas stream containing the reactants or in an oxygen containing gas stream at temperatures between 150 and 350°C.

6. $PdZrO_2$-precipitation catalyst having a content of Pd between 0.2 and 20 weight%, prepared by
   a) impregnating $ZrO_2$ with a water soluble palladium salt or a complexed palladium salt,
   b) drying the mixture and
   c) reducing the Pd-complex with hydrogen.

7. Precipitation catalyst according to patent claim 6, characterized in that the content of Pd is preferably between 1 and 5 weight%.

8. Precipitation catalyst according to patent claims 6 and 7, characterized in that as water soluble Pd salts palladium chlorides or complex palladium chlorides are used.

9. Precipitation catalyst according to patent claims 6, 7 and 8, characterized in that the drying of the mixture is effected at 120 to 300 ° C.

10. Precipitation catalyst according to patent claims 6, 7, 8 and 9, characterized in that the reduction is carried out with a hydrogen/nitrogen mixture having a $H_2$:$N_2$-ratio between 1:10 and 10:1 at a temperature between 200 and 600 ° C.

11. Process for the complete oxidation of carbon monoxide, aliphatic and aromatic hydrocarbons as well as of aliphatic alcohols, characterized in that the compounds are reacted in an oxygen containing gas stream in the presence of an activated catalyst of the general formula $Pd_x(ZrO_z)_y$, x, y and z having the mentioned meaning, in the form of a crystalline or amorphous alloy according to one or more of the claims 1 to 5 or in the presence of a $PdZrO_2$-precipitation catalyst according to one or more of the claims 6 to 10 at temperatures between room temperature and 350 ° C and at pressures between normal pressure and 10 bar.

12. Process according to patent claim 11 for the complete oxidation of carbon monoxide, characterized in that an air stream containing from 100 ppm to 50 vol.-% of carbon monoxide at temperatures between room temperature and 350 ° C, preferably between 100 and 200 ° C, and at pressures between normal pressure and 10 bar, preferably at normal pressure, is passed over an activated $Pd_x(ZrO_z)_y$-catalyst, wherein x, y and z have the mentioned meanings, in the form of a crystalline or amorphous alloy according to one or more of the claims 1 to 5.

13. Process according to patent claim 11 for the complete oxidation of methyl alcohol, characterized in that an air stream containing from 100 ppm to 7 vol.-% or more than 36 vol.-% of methyl alcohol at temperatures between room temperature and 350 ° C, preferably between 50 and 200 ° C, and at pressures between normal pressure and 10 bar, preferably at normal pressure, is passed over an activated $Pd_x(ZrO_z)_y$-catalyst, wherein x, y and z have the mentioned meanings, in the form of a crystalline or amorphous alloy according to one or more of the claims 1 to 5 or in the presence of a $PdZrO_2$-precipitation catalyst according to one or more of the claims 6 to 10.

**Revendications**

1. Catalyseur activé de la formule générale $Pd_x(ZrO_z)_y$, dans laquelle x signifie un nombre entre 1 et 99, y signifie la différence entre x et 100 et z signifie une valeur entre 0,5 et 2 et le palladium se présente sous forme de particules de palladium qui sont enrobées dans une matrice de $ZrO_2$.

2. Catalyseur activé selon la revendication 1 de la formule générale $Pd_x(ZrO_z)_y$, dans laquelle x signifie un nombre compris entre 20 et 80, y signifie la différence entre x et 100 et z signifie une valeur entre 1 et 2, notamment x = 33, y = 67 et z = 2.

3. Catalyseur activé selon la revendication 1 ou 2 sous forme d'alliage amorphe.

4. Catalyseur activé selon la revendication 1 ou 2 sous forme d'alliage cristallin ou cristallisé.

5. Catalyseur activé selon la revendication 1, 2, 3 ou 4, caractérisé en ce que l'activation s'effectue en partant d'un alliage $Pd_xZr_y$ dans lequel x et y ont la signification indiquée, dans un courant gazeux (in situ) contenant les réactants ou dans un courant gazeux à teneur d'oxygène à des températures situées entre 150 et 350 ° C.

**6.** Catalyseur de précipitation $PdZrO_2$ ayant une teneur en Pd située entre 0,2 et 20 % en poids préparé par
a) imprégnation de $ZrO_2$ avec un sel de palladium hydrosoluble ou un sel de palladium complexé
b) séchage du mélange et
c) réduction du complexe Pd avec de l'hydrogène.

**7.** Catalyseur de précipitation selon la revendication 6, caractérisé en ce que la teneur en Pd se situe de préférence entre 1 et 5 % en poids.

**8.** Catalyseur de précipitation selon les revendications 6 et 7, caractérisé en ce qu'en tant que sels de Pd hydrosolubles, on utilise des chlorures de palladium complexés ou de palladium.

**9.** Catalyseur de précipitation selon les revendications 6, 7 et 8, caractérisé en ce que le séchage du mélange s'effectue à 120 jusqu'à 300 ° C.

**10.** Catalyseur de précipitation selon les revendications 6, 7, 8 et 9, caractérisé en ce que la réduction s'effectue avec un mélange gazeux hydrogène-azote dans un rapport $H_2$:$N_2$ situé entre 1 à 10 et 10 à 1 à une température entre 200 et 600 ° C.

**11.** Procédé pour l'oxydation complète du monoxyde de carbone, d'hydrocarbures aliphatiques et aromatiques ainsi que d'alcools aliphatiques, caractérisé en ce que les composés dans le courant gazeux à teneur d'oxygène sont mis en réaction en présence d'un catalyseur activé de la formule générale $Pd_x$-$(ZrO_z)_y$, dans laquelle x, y et z ont la signification indiquée, sous forme d'un alliage cristallin ou amorphe selon une ou plusieurs des revendications 1 à 5 ou en présence d'un catalyseur de précipitation $PdZrO_2$ selon une ou plusieurs des revendications 6 à 10, à des températures situées entre la température ambiante et 350 ° C et des pressions allant de la pression normale jusqu'à 10 bars.

**12.** Procédé selon la revendication 11 pour l'oxydation complète du monoxyde de carbone, caractérisé en ce qu'un courant d'air contenant 100 ppm jusqu'à 50 % en volume de monoxyde de carbone est amené au-dessus d'un catalyseur $Pd_x(ZrO_z)_y$ dans lequel x, y et z ont la signification indiquée, sous forme d'un alliage cristallin ou amorphe selon une ou plusieurs des revendications 1 à 5 ou en présence d'un catalyseur de précipitation $PdZrO_2$ selon une ou plusieurs des revendications 6 à 10, à des températures entre la température ambiante et 350 ° C, de préférence entre 100 et 200 ° C et à des pressions allant de la pression normale jusqu'à 10 bars, de préférence à la pression normale.

**13.** Procédé selon la revendication 11 pour l'oxydation complète de l'alcool méthylique, caractérisé en ce qu'un courant d'air contenant 100 ppm jusqu'à 7 % en volume ou plus de 36 % en volume d'alcool méthylique est amené sur un catalyseur $Pd_x(ZrO_z)_y$, dans lequel x, y et z ont la signification indiquée, sous forme d'un alliage cristallin ou amorphe selon une ou plusieurs des revendications 1 à 5 ou en présence d'un catalyseur de précipitation $PdZrO_2$ selon une ou plusieurs des revendications 6 à 10, à des températures situées entre la température ambiante et 350 ° C, de préférence entre 50 et 200 ° C et à des pressions allant de la pression normale jusqu'à 10 bars, de préférence à la pression normale.

Abbildung 1

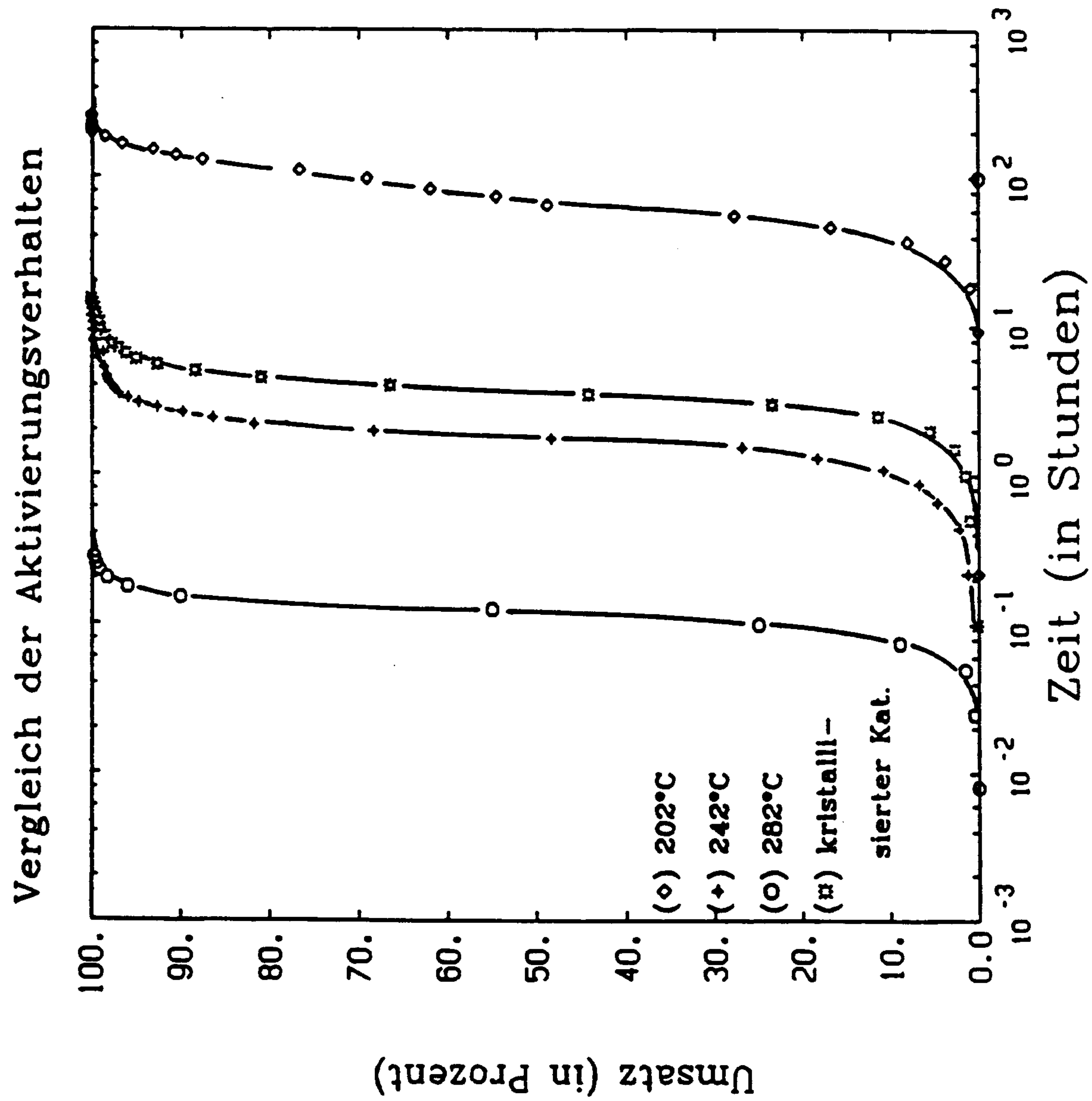
Vergleich der Aktivierungsverhalten
Umsatz (in Prozent)
100.
90.
80.
70.
60.
50.
40.
30.
20.
10.
0.0
(◇) 202°C
(+) 242°C
(O) 282°C
(¤) kristalli-
sierter Kat.
$10^{-3}$
$10^{-2}$
$10^{-1}$
$10^{0}$
$10^{1}$
$10^{2}$
$10^{3}$
Zeit (in Stunden)

Abbildung 2

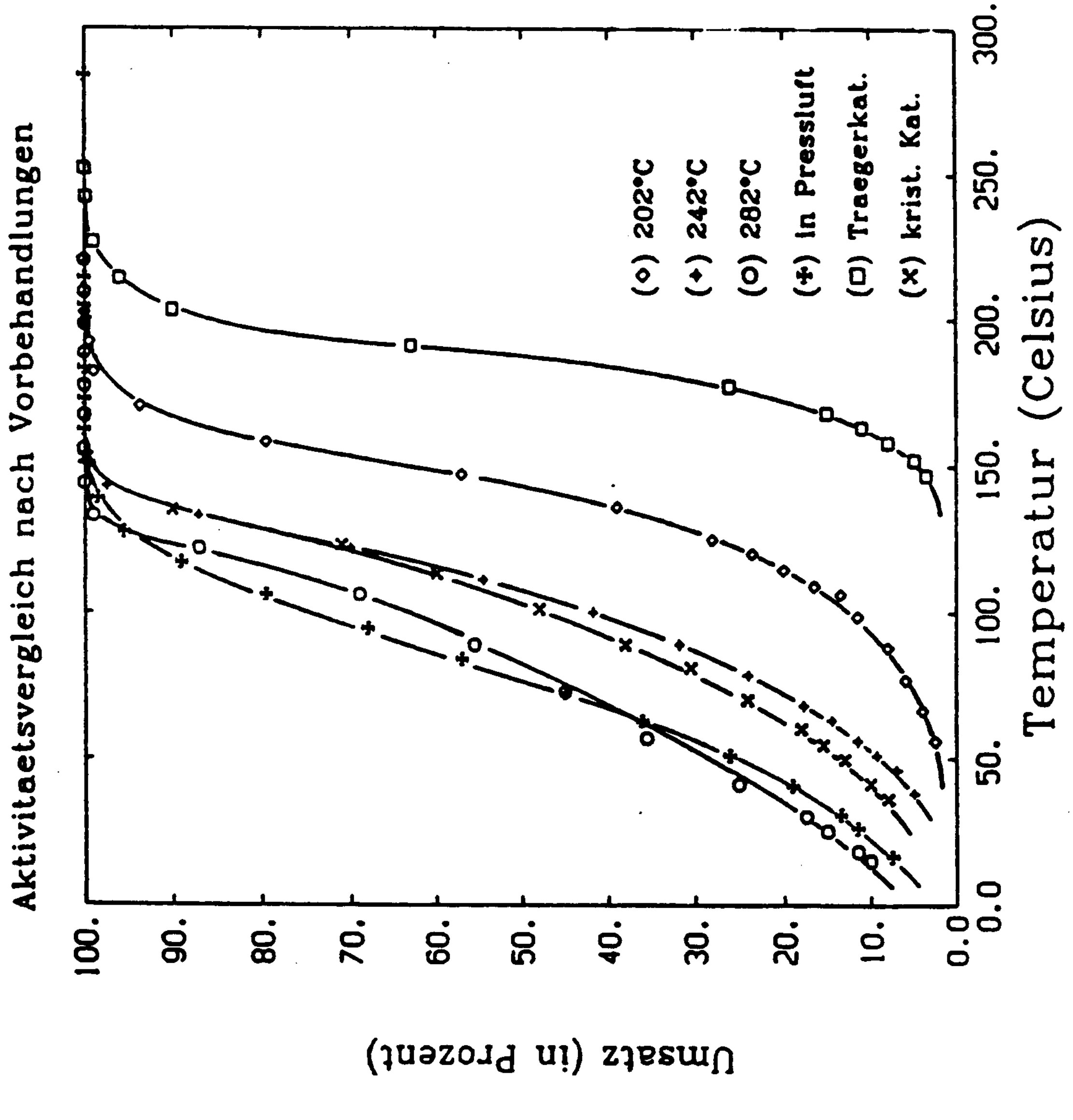
Aktivitaetsvergleich nach Vorbehandlungen
Umsatz (in Prozent)
Temperatur (Celsius)
0.0
10.
20.
30.
40.
50.
60.
70.
80.
90.
100.
0.0
50.
100.
150.
200.
250.
300.
(◇) 202°C
(+) 242°C
(O) 282°C
(✚) In Pressluft
(□) Traegerkat.
(×) krist. Kat.

Abbildung 3

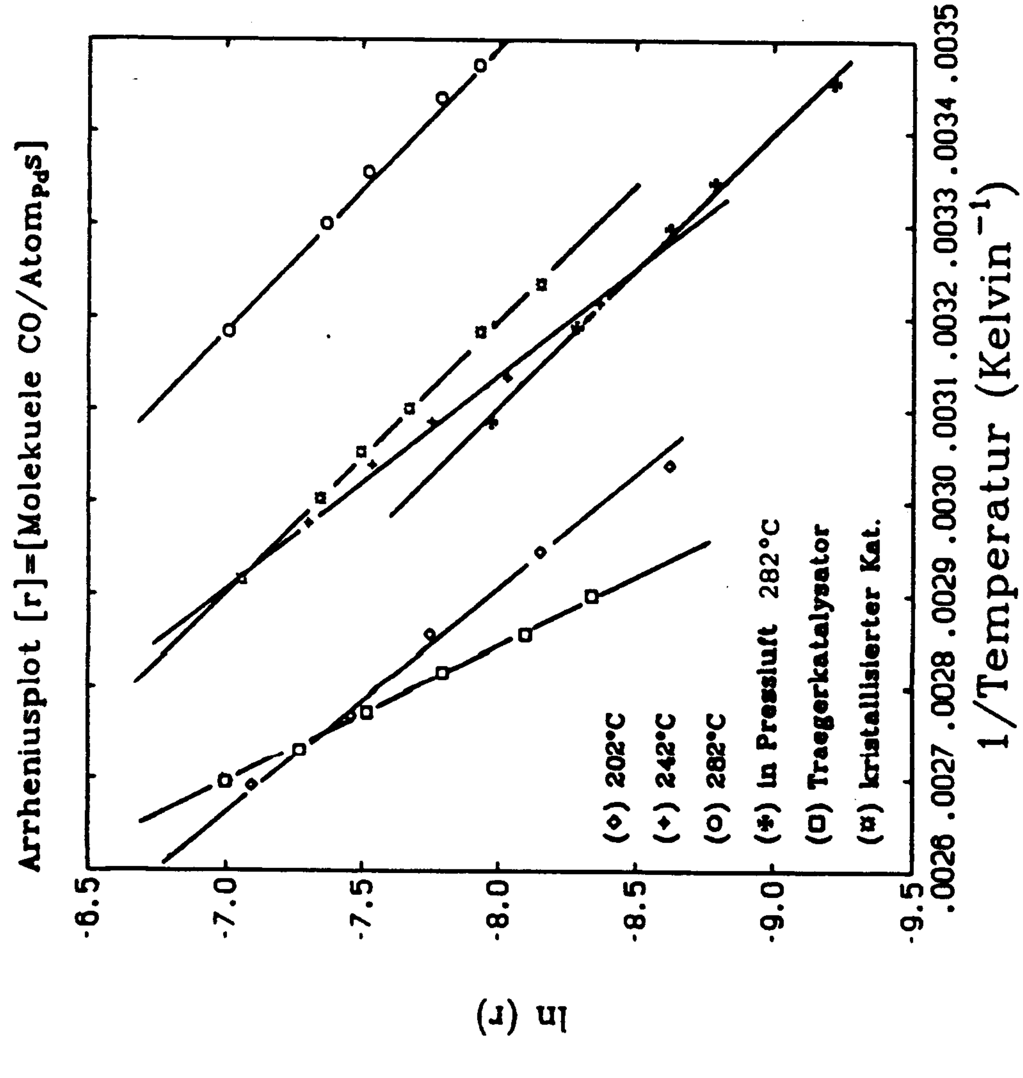

Arrheniusplot [r]=[Molekuele CO/Atom$_{Pd}$s]
ln (r)
-6.5
-7.0
-7.5
-8.0
-8.5
-9.0
-9.5
.0026 .0027 .0028 .0029 .0030 .0031 .0032 .0033 .0034 .0035
1/Temperatur (Kelvin$^{-1}$)
(◇) 202°C
(+) 242°C
(○) 282°C
(✱) in Pressluft 282°C
(□) Traegerkatalysator
(⌑) kristallisierter Kat.